# EUROPÄISCHE PATENTANMELDUNG

(11) **EP 1 251 697 A2**
(43) Veröffentlichungstag der Anmeldung: **23.10.2002**
(21) Anmeldenummer: 02008933.0
(22) Anmeldetag: 22.04.2002
(51) Int. Cl.: H04N 7/16, H04N 7/167, H04N 5/00

(54) **Entschlüsselungs-Modul für Receiver zum Empfangen von digital codierten Rundfunk- oder Fernsehsignalen**

(30) Priorität: 20.04.2001 DE 10119656
(71) Anmelder: MASCOM GmbH, 86511 Unterbergen (DE)
(72) Erfinder: Gruber, Heinz, 86511 Unterbergen (DE)
(74) Vertreter: Repkow, Ines, Dr. Dipl.-Ing.

(57) **Zusammenfassung**

Es wird ein zur Entschlüsselung von verschlüsselt übertragenen Sendungen benötigtes Entschlüsselungs-Modul für einen Receiver zum Empfangen von digital codierten Rundfunk- und Fernsehsignalen beschrieben. Das beschriebene Entschlüsselungs-Modul zeichnet sich dadurch aus, daß es das Eintreten bestimmter Zustände oder Ereignisse überwacht, und beim Eintreten der bestimmten Zustände oder Ereignisse einen Dialog mit dem Benutzer startet oder veranlaßt. Dadurch ist es möglich, daß eine von einem Programmanbieter ausgegebene Chipkarte, deren Besitz alleine nicht ausreichen soll, um das vom Programmanbieter angebotene Programm empfangen zu können, zusammen mit beliebigen Receivern verwendet werden kann.

## Beschreibung

Die vorliegende Erfindung betrifft eine Vorrichtung gemäß dem Oberbegriff des Patentanspruchs 1, d.h. ein zur Entschlüsselung von verschlüsselt übertragenen Sendungen benötigtes Entschlüsselungs-Modul für einen Receiver zum Empfangen von digital codierten Rundfunk- oder Fernsehsignalen.

Receiver für digital codierte Rundfunk- oder Fernsehprogramme sind Einrichtungen, die benötigt werden, um über Satelliten, Kabelnetze, oder auf sonstige Art und Weise übertragene digital codierte Rundfunk- oder Fernsehprogramme empfangen und so umsetzen zu können, daß sie über Lautsprecher und Bildschirme wiedergebbar sind.

Solche Receiver sind seit mehreren Jahren in den verschiedensten Ausführungsformen bekannt.

Ebenfalls bekannt ist, daß für den Empfang bestimmter Programme eine besondere Berechtigung erforderlich ist.

Diese Berechtigung kann von der Bezahlung einer Gebühr an den Anbieter des Programmes, oder vom Wohnort des Benutzers abhängen.

Ersteres dient zur Finanzierung der Leistungen des Anbieters, und letzteres beispielsweise zur Vermeidung von urheberrechtlichen Problemen (sorgt man durch eine entsprechende Beschränkung bei der Vergabe von Berechtigungen dafür, daß ein über Satellit abgestrahltes Programm nur in einem bestimmten Staat empfangen werden kann, so entgeht man der Gefahr, die urheberrechtlichen Bestimmungen der Nachbarstaaten zu verletzen).

Programme, für deren Empfang eine besondere Berechtigung erforderlich ist, werden im allgemeinen verschlüsselt übertragen, wobei nur die zum Empfang berechtigten Personen über die Mittel verfügen, die benötigt werden, um die verschlüsselten Daten entschlüsseln zu können.

Zu diesen Mitteln gehört im allgemeinen eine vom Programmanbieter vergebene Chipkarte, auf welcher ein zur Entschlüsselung der verschlüsselten Programme benötigter, im allgemeinen als Descrambling-Schlüssel bezeichneter Schlüssel gespeichert ist.

Die Entschlüsselung selbst erfolgt durch eine auch als Descrambler bezeichnete Entschlüsselungsvorrichtung. Damit der Descrambler die verschlüsselten Daten richtig entschlüsselt, muß diesem der auf der Chipkarte gespeicherte Descrambling-Schlüssel zugeführt werden; wenn dem Descrambler nicht der richtige Descrambling-Schlüssel zugeführt wird, kann er die von ihm zu entschlüsselnden Daten nicht richtig entschlüsseln.

Der Descrambler ist entweder Bestandteil des Receivers oder eines in den Receiver einsteckbaren und durch den Benutzer des Receivers austauschbaren Entschlüsselungs-Moduls.

Ein solches Entschlüsselungs-Modul ist beispielsweise ein sogenanntes CI-Modul, welches von der Firma SCM Microsystems, Sperl-Ring 4, 85276 Pfaffenhofen, erhältlich ist. CI-Module weisen für den Anschluß an den Receiver eine als Common Interface bezeichnete Schnittstelle auf, über welche sie mit mit fast allen Receivern, die Anschlußmöglichkeiten für durch den Benutzer des Receivers austauschbare Entschlüsselungs-Module haben, in Verbindung hringbar sind.

Weil von verschiedenen Programmanbietern ausgegebene Chipkarten unterschiedlich angesprochen werden müssen, damit sie den in ihnen gespeicherten Descrambling-Schlüssel ausgeben, und weil der Descrambling-Schlüssel häufig selbst ebenfalls verschlüsselt zum Receiver bzw. zum Entschlüsselungs-Modul übertragen wird und dort entschlüsselt werden muß, müssen der Receiver und die Chipkarte (falls die Chipkarte direkt in den Receiver gesteckt wird) bzw. das Entschlüsselungs-Modul und die Chipkarte (falls die Chipkarte in das Entschlüsselungs-Modul gesteckt wird) aneinander angepaßt sein.

Aus diesem Grund sind Receiver mit durch den Benutzer des Receivers austauschbaren Entschlüsselungs-Modulen flexibler einsetzbar als andere Receiver. Dann können - sofern die benötigten Chipkarten und die zugehörigen Entschlüsselungs-Module verfügbar sind - mit einem einzigen Receiver alle Programme empfangen werden.

Die Praxis sieht jedoch anders aus. Manche Programmanbieter verkaufen ihre Chipkarten nur zusammen mit einem zugehörigen Receiver, wobei die Chipkarten direkt in diesen Receiver eingesteckt werden müssen und darüber hinaus nur zusammen mit diesem Receiver, und nicht auch zusammen mit anderen Receivern verwendet werden können.

Der Grund hierfür liegt unter anderem in der moralischen und/oder gesetzlichen Verpflichtung der Programmanbieter. Beispielsweise sollten oder müssen sie dafür sorgen, daß Sendungen, die nur für Personen ab einem bestimmten Alter freigegeben sind, nicht von jüngeren Personen angeschaut werden können.

Dies ist zumindest bei den Programmen, die nach dem Digital-Video-Broadcasting- bzw. DVB-Standard von Satelliten abgestrahlt werden, ohne größere Probleme möglich.

Solche Programme, genauer gesagt die diese Programme repräsentierenden Daten enthalten nämlich ein sogenanntes FSK-Signal, aus welchem ersichtlich ist, ab welchem Alter die gerade laufende Sendung freigegeben ist. In diesem Fall kann anhand des FSK-Signals überprüft werden, ob die gerade empfangene Sendung von allen Personen oder nur von Personen ab einem bestimmten Alter gesehen werden darf, und dann, wenn letzteres der Fall ist, die Wiedergabe der betreffenden Sendung von der Eingabe einer entsprechenden Geheimzahl abhängig gemacht werden.

Es sind Receiver bekannt, die dies tun. Allerdings wird diese Überprüfung nicht bei allen Receivern durchgeführt. Folglich kann der Jugendschutz nur dann gewährleistet werden, wenn die Programmanbieter dafür sorgen, daß ihre Chipkarten nur in einem ganz bestimmten, zusammen mit der Chipkarte verkauften Receiver verwendbar sind, und dieser Receiver ein Receiver ist, welcher das FSK-Signal abfrägt und bei Bedarf die Eingabe einer Geheimzahl fordert.

Diese Vorgehensweise bringt für den Kunden jedoch einige Nachteile mit sich. Insbesondere kann es vorkommen, daß der zu verwendende Receiver nicht den Qualitätsvorstellungen und/oder den Preisvorstellungen des Kunden entspricht, und darüber hinaus kann es erforderlich werden, daß sich der Kunde mehrere Receiver anschaffen muß, um alle ihn interessierenden Programme empfangen zu können.

Diese Umstände halten viele Personen davon ab, Kunde bei Programmanbietern zu werden, deren Programme nur wie beschrieben empfangen werden können.

Entsprechendes gilt auch für den Fall, daß ein Programmanbieter aus anderen Gründen, beispielsweise aus urheberrechtlichen Gründen verhindern möchte, daß der Besitz der Chipkarte allein ausreicht, um das von ihm angebotene Programm empfangen zu können.

Der vorliegenden Erfindung liegt daher die Aufgabe zugrunde, eine Möglichkeit zu finden, durch welche die Notwendigkeit entfällt, für den Empfang eines bestimmten Programmes einen eigenen Receiver anschaffen zu müssen.

Diese Aufgabe wird erfindungsgemäß durch das in Patentanspruch 1 beanspruchte Entschlüsselungs-Modul gelöst.

Das erfindungsgemäße Entschlüsselungs-Modul zeichnet sich dadurch aus, daß es das Eintreten bestimmter Zustände oder Ereignisse überwacht, und beim Eintreten der bestimmten Zustände oder Ereignisse einen Dialog mit dem Benutzer startet oder veranlaßt.

Wenn ein Programmanbieter dafür sorgt, daß die von ihm ausgegebenen Chipkarten nur zusammen mit einem solchen Entschlüsselungs-Modul verwendet werden können, kann er damit erreichen, daß der Besitz der Chipkarte alleine nicht ausreicht, um das von ihm angebotene Programm zu empfangen; der Benutzer der Chipkarte muß zusätzlich das erfindungsgemäße Entschlüsselungs-Modul besitzen, und dieses Entschlüsselungs-Modul kann durch den von ihm gestarteten oder veranlaßten Dialog weitere Berechtigungsnachweise vom Benutzer verlangen.

Andererseits entfällt für den Besitzer der Chipkarte die Notwendigkeit, einen speziellen Receiver verwenden zu müssen; sofern das Entschlüsselungs-Modul eine genormte Schnittstelle, beispielsweise das sogenannte Common Interface aufweist, kann es in die unterschiedlichsten Receiver eingesetzt werden. Dadurch kann der Besitzer der Chipkarte einen Receiver seiner Wahl verwenden, und muß auch nicht verschiedene Receiver besitzen, um verschiedene Programme empfangen zu können.

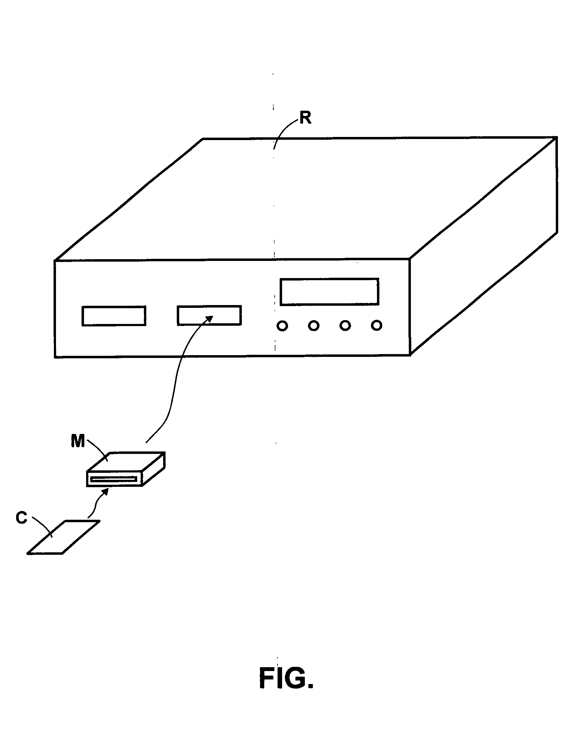

Vorteilhafte Weiterbildungen der Erfindung sind den Unteransprüchen, der folgenden Beschreibung und der Figur entnehmbar.

Die Erfindung wird im folgenden anhand eines Ausführungsbeispiels unter Bezugnahme auf die Figur näher beschrieben.

Die Figur zeigt schematisch den Aufbau der im folgenden beschriebenen Anordnung zum Empfangen von digital codierten Rundfunk- und/oder Fernsehprogrammen.

Die in der Figur gezeigte Anordnung besteht aus einem Receiver R, einem in den Receiver R einsetzbaren und durch den Benutzer des Receivers austauschbaren Entschlüsselungs-Modul M, und einer in das Entschlüsselungs-Modul M einsetzbaren Chipkarte C.

Das Entschlüsselungs-Modul M ist im betrachteten Beispiel ein sogenanntes CI-Modul, welches von der Firma SCM Microsystems, Sperl-Ring 4, 85276 Pfaffenhofen, erhältlich ist. CI-Module weisen für den Anschluß an den Receiver eine als Common Interface bezeichnete Schnittstelle auf, über welche sie mit mit fast allen Receivern, die Anschlußmöglichkeiten für durch den Benutzer des Receivers austauschbare Entschlüsselungs-Module haben, in Verbindung bringbar sind. Es könnte sich aber auch um ein beliebiges anderes Entschlüsselungs-Mudul handeln, das an einen Receiver anschließbar und durch den Benutzer des Receivers austauschbar ist.

Der Receiver R weist einen oder mehrere von außen frei zugängliche Schächte auf, in welche ein oder mehrere Entschlüsselungs-Module M eingesteckt werden können; die Entschlüsselungs-Module M können bei Bedarf durch den Benutzer auch ausgetauscht werden. Im in den Receiver R eingesteckten Zustand eines Entschlüsselungs-Moduls M kommen das Entschlüsselungs-Modul M und der Receiver R über eine Schnittstelle, beispielweise über das vorstehend bereits erwähnte Common Interface elektrisch miteinander in Verbindung.

Die Chipkarte C wird in das Entschlüsselungs-Modul M eingesteckt.

Dem Receiver R wird von einer Satelliten-Antenne, einer normalen Antenne, einem Kabelnetz oder von sonstigen Quellen ein digital codiertes Rundfunk- oder Fernsehsignal zugeführt. Sofern die vom Receiver empfangenen Daten nach einem gebräuchlichen Schema (beispielsweise nach dem DVB-Standard) codiert und nicht verschlüsselt sind, kann der Receiver R diese Daten in ein Format umsetzen, das von einem an den Receiver anschließbaren Bild- oder Tonwiedergabegerät, beispielsweise einem Fernsehgerät wiedergegeben werden kann.

Wenn die dem Receiver R zugeführten Daten verschlüsselt sind, werden sie durch das Entschlüsselungs-Modul M und/oder die Chipkarte C entschlüsselt. Wenn die Chipkarte C die verschlüsselten Daten selbst entschlüsseln kann, stellt die Chipkarte C das vorliegend beschriebene Entschlüsselungs-Modul dar.

Das Entschlüsselungs-Modul M weist die Besonderheit auf, daß es das Eintreten bestimmter Zustände oder Ereignisse überwacht, und beim Eintreten der bestimmten Zustände oder Ereignisse einen Dialog mit dem Benutzer startet.

Im betrachteten Beispiel besteht die Überwachung der bestimmten Zustände oder Ereignisse darin, daß der Inhalt oder der zeitliche Verlauf bestimmter Teile der dem Receiver R von außen zugeführten Daten überwacht wird.

Es sei bereits an dieser Stelle darauf hingewiesen, daß durch das Entschlüsselungs-Modul zusätzlich oder alternativ auch beliebige andere Zustände oder Ereignisse überwacht werden können.

Wenn das Entschlüsselungs-Modul M bei der von ihm durchgeführten Überwachung feststellt, daß ein bestimmter Zustand oder ein bestimmtes Ereignis eingetreten ist, startet es über den Receiver R und das daran angeschlossene Rundfunk- oder Fernsehgerät einen Dialog mit dem Benutzer.

Innerhalb dieses Dialoges kann der Benutzer zur Eingabe bestimmter Informationen aufgefordert werden. Darüber hinaus kann vorgesehen werden, daß das Entschlüsselungs-Modul die Wiedergabe der gerade empfangenen Sendung sperrt, wenn und so lange der Benutzer durch von ihm während des Dialogs eingegebene Informationen nicht den Nachweis erbringen kann, daß er berechtigt ist, die betreffende Sendung anzusehen, oder anzuhören.

Im betrachteten Beispiel sind die vom Entschlüsselungs-Modul überwachten Teile der vom Receiver empfangenen Daten diejenigen Daten, die spezifizieren, ab welchem Alter die gerade empfangene Sendung freigegeben wird. Diese, im folgenden als FSK-Signal bezeichneten Daten werden (zumindest beim DVB-Standard) zusammen mit den die gerade laufende Rundfunk- oder Fernsehsendung repräsentierenden Daten übertragen.

Wenn das Entschlüsselungs-Modul bei der von ihm durchgeführten Überwachung feststellt, daß die gerade empfangene Sendung erst ab einem bestimmten Alter freigegeben ist, startet es den bereits erwähnten Dialog mit dem Benutzer.

In diesem Dialog wird dem Benutzer mitgeteilt, daß die gerade empfangene Sendung erst ab einem bestimmten Alter freigegeben ist, und daß der Benutzer eine bestimmte Geheimzahl (PIN) eingeben muß, damit die betreffende Sendung wiedergegeben werden kann. Gleichzeitig unterbindet das Entschlüsselungs-Modul die Entschlüsselung der empfangenen Sendung oder die Weiterleitung der entschlüsselten Daten an den Receiver, so daß die empfangene Sendung nicht gesehen oder gehört werden kann.

Der Benutzer kann die von ihm geforderte Geheimzahl über die Fernbedienung des Receivers eingeben.

Der Receiver leitet die vom Benutzer über die Fernbedienung eingegebenen Daten an das Entschlüsselungs-Modul M weiter, und das Entschlüsselungs-Modul M überprüft, ob diese Daten mit im Entschlüsselungs-Modul oder auf der Chipkarte gespeicherten Daten übereinstimmen. Wenn dies der Fall ist, wird der Dialog beendet und die gerade empfangene Sendung wiedergegeben. Anderenfalls wird der Benutzer abermals zur Eingabe der Geheimzahl aufgefordert. Nach einer bestimmten Anzahl von Falscheingaben werden die Abfrage der Geheimzahl und/oder weitere Eingabeversuche für eine vorbestimmte Zeit unterbunden oder (bis zu einer durch den Benutzer oder den Programmanbieter oder den Hersteller des Entschlüsselungs-Moduls veranlaßbaren oder durchführbaren Entsperrung) ganz gesperrt.

Es erweist sich als vorteilhaft, wenn auf der Chipkarte oder dem Entschlüsselungs-Modul mehrere Geheimzahlen gespeichert sind, und das Entschlüsselungs-Modul die während des Dialoges eingegebene Geheimzahl mit einer ausgewählten einzigen, mehreren oder allen Geheimzahlen vergleicht oder vergleichen kann. Dies läßt sich beispielsweise dahingehend ausnutzen, daß verschiedenen Personen unterschiedliche Geheimzahlen zugeteilt werden. Dies wiederum ermöglicht es, nach Personen differenzierte Berechtigungen zu vergeben. Beispielsweise kann vorgesehen werden, daß eine erste Person mit der ihr zugeteilten Geheimzahl nur Sendungen freischalten kann, die für Personen mit einem Alter von 12 Jahren freigegeben sind, daß eine zweite Person mit der ihr zugeteilten Geheimzahl nur Sendungen freischalten kann, die für Personen mit einem Alter von 16 Jahren freigegeben sind, und daß eine dritte Person mit der ihr zugeteilten Geheimzahl alle Sendungen freischalten kann.

Darüber hinaus kann durch die mehreren Geheimzahlen für verschiedene Personen einzeln festgelegt werden, ob und/oder wie lange und/oder wie häufig und/oder zu welchem Zeiten die jeweilige Person das empfangene Programm ansehen oder anhören darf.

Unabhängig hiervon erweist es sich als vorteilhaft, wenn der Benutzer die Möglichkeit hat, die Geheimzahl oder die Geheimzahlen, mit welchen das Entschlüsselungs-Modul die während des Dialoges eingegebene Geheimzahl vergleicht, zu verändern.

Vorzugsweise wird dem Benutzer im Dialog auch der Titel der gerade empfangenen Sendung mitgeteilt.

Vorzugsweise bietet der vom Entschlüsselungs-Modul gestartete Dialog dem Benutzer auch die Möglichkeit, den Dialog ohne Eingabe der vom Benutzer geforderten Information zu beenden.

Das beschriebene Entschlüsselungs-Modul ermöglicht es unabhängig von den Einzelheiten der praktischen Realisierung, daß eine von einem Programmanbieter ausgegebene Chipkarte, deren Besitz alleine nicht ausreichen soll, um das vom Programmanbieter angebotene Programm empfangen zu können, zusammen mit beliebigen Receivern verwendet werden kann.

### Bezugszeichenliste

- C: Chipkarte
- M: Entschlüsselungs-Modul
- R: Receiver

## Patentansprüche

1. Zur Entschlüsselung von verschlüsselt übertragenen Sendungen benötigtes Entschlüsselungs-Modul (M) für einen Receiver (R) zum Empfangen von digital codierten Rundfunk- und Fernsehsignalen, **dadurch gekennzeichnet, daß** das Entschlüsselungs-Modul das Eintreten bestimmter Zustände oder Ereignisse überwacht, und beim Eintreten der bestimmten Zustände oder Ereignisse einen Dialog mit dem Benutzer startet oder veranlaßt.

2. Entschlüsselungs-Modul nach Anspruch 1, **dadurch gekennzeichnet, daß** das Entschlüsselungs-Modul (M) zur Aufnahme einer Chipkarte (C) ausgelegt ist.

3. Entschlüsselungs-Modul nach Anspruch 1, **dadurch gekennzeichnet, daß** das Entschlüsselungs-Modul (M) durch eine Chipkarte (C) gebildet wird.

4. Entschlüsselungs-Modul nach Anspruch 2 oder 3, **dadurch gekennzeichnet, daß** die Chipkarte (C) die Entschlüsselung von verschlüsselt übertragenen Sendungen durchführt.

5. Entschlüsselungs-Modul nach einem der vorhergehenden Ansprüche, **dadurch gekennzeichnet, daß** das Entschlüsselungs-Modul (M) ein durch den Benutzer des Receivers (R) austauschbares Entschlüsselungs-Modul ist.

6. Entschlüsselungs-Modul nach einem der vorhergehenden Ansprüche, **dadurch gekennzeichnet, daß** das Entschlüsselungs-Modul (M) ein CI-Modul ist.

7. Entschlüsselungs-Modul nach einem der vorhergehenden Ansprüche, **dadurch gekennzeichnet, daß** der Benutzer innerhalb des durch das Entschlüsselungs-Modul (M) gestarteten oder veranlaßten Dialogs zur Eingabe bestimmter Informationen aufgefordert wird

8. Entschlüsselungs-Modul nach Anspruch 7, **dadurch gekennzeichnet, daß** das Entschlüsselungs-Modul (M) die Wiedergabe der gerade empfangenen Sendung verhindert, wenn und so lange der Benutzer nicht durch eine von ihm während des Dialogs einzugebende Informationen nachweist, daß er berechtigt ist, die betreffende Sendung anzusehen oder anzuhören.

9. Entschlüsselungs-Modul nach Anspruch 7 oder 8, **dadurch gekennzeichnet, daß** das Entschlüsselungs-Modul (M) die vom Benutzer während des Dialoges eingegebenen Informationen mit im Entschlüsselungs-Modul gespeicherten Informationen vergleicht.

10. Entschlüsselungs-Modul nach Anspruch 9, **dadurch gekennzeichnet, daß** die im Entschlüsselungs-Modul (M) gespeicherten Informationen durch den Benutzer veränderbar sind.

11. Entschlüsselungs-Modul nach einem der Ansprüche 2 bis 9, **dadurch gekennzeichnet, daß** das Entschlüsselungs-Modul (M) die vom Benutzer während des Dialoges eingegebenen Informationen mit auf der Chipkarte gespeicherten Informationen vergleicht oder vergleichen läßt.

12. Entschlüsselungs-Modul nach einem der vorhergehenden Ansprüche, **dadurch gekennzeichnet, daß** die Überwachung, die das Entschlüsselungs-Modul (M) durchführt, darin besteht, daß der Inhalt bestimmter Daten überwacht wird, die in den vom Receiver empfangenen Daten enthalten sind.

13. Entschlüsselungs-Modul nach einem der vorhergehenden Ansprüche, **dadurch gekennzeichnet, daß** die Überwachung, die das Entschlüsselungs-Modul (M) durchführt, das Alter betreffen, ab welchem die gerade empfangene Sendung freigegeben ist.

14. Entschlüsselungs-Modul nach Anspruch 13, **dadurch gekennzeichnet, daß** das Entschlüsselungs-Modul (M) dann, wenn es feststellt, daß die gerade empfangene Sendung erst ab einem bestimmten Alter freigegeben ist, einen Dialog mit dem Benutzer startet, innerhalb dessen der Benutzer zur Eingabe einer Geheimzahl aufgefordert wird, und daß die gerade empfangene Sendung nur wiedergegeben wird, wenn die vom Benutzer eingegebene Geheimzahl mit einer im Entschlüsselungs-Modul oder auf der Chipkarte gespeicherten Geheimzahl übereinstimmt.

15. Entschlüsselungs-Modul nach einem der vorhergehenden Ansprüche, **dadurch gekennzeichnet, daß** der Benutzer in dem vom Entschlüsselungs-Modul (M) gestarteten Dialog über den Titel der Sendung informiert wird, deren Wiedergabe durch die vom Benutzer einzugebende Information freigeschaltet werden muß.

16. Entschlüsselungs-Modul mach einem der vorhergehenden Ansprüche, **dadurch gekennzeichnet, daß** der Benutzer in dem vom Entschlüsselungs-Modul (M) gestarteten Dialog über das Alter informiert wird, ab welchem die Sendung freigegeben ist, deren Wiedergabe durch die vom Benutzer einzugebende Information freigeschaltet werden muß.

17. Entschlüsselungs-Modul nach einem der vorhergehenden Ansprüche, **dadurch gekennzeichnet, daß** der vom Entschlüsselungs-Modul (M) gestarteten Dialog dem Benutzer die Möglichkeit bietet, den Dialog ohne Eingabe der vom Benutzer geforderten Information zu beenden.

18. Entschlüsselungs-Modul nach einem der vorhergehenden Ansprüche, **dadurch gekennzeichnet, daß** die Eingabe der vom Benutzer geforderten Information über die Fernbedienung des Receivers (R) erfolgt.
